# EUROPEAN PATENT SPECIFICATION

(11) **EP 3 575 051 B1**
(45) Date of publication and mention of the grant of the patent: **22.06.2022**
(21) Application number: 19174684.1
(22) Date of filing: 15.05.2019
(51) Int. Cl.: B27B 5/22, B27B 31/06, B65G 47/22

(54) **DEVICE FOR DISPLACING TIMBER PIECES**
VORRICHTUNG ZUR VERSCHIEBUNG VON HOLZSTÜCKEN
DISPOSITIF POUR DÉPLACER DES PIÈCES DE BOIS

(30) Priority: 28.05.2018 SE 1850641
(43) Date of publication of application: 04.12.2019
(73) Proprietor: Renholmen AB, 934 24 Byske (SE)
(72) Inventor: MARKLUND, Gunnar, 930 47 BYSKE (SE); HEDMAN, Jon, 941 33 Piteå (SE)
(74) Representative: Zacco Sweden AB

(56) References cited:
- US-A- 5 911 302
- US-B1- 6 173 829

## Description

The present invention relates to a device for displacing timber pieces longitudinally by adjusting the timber pieces as per the preamble of appended claim 1. Such a device is known from US 5 911 302 A. Such a device comprises a cross conveyor equipped with a driver to convey timber pieces in their cross direction, wherein stops are arranged to bear against one face of the timber pieces and thereby displace the timber piece longitudinally during part of the transportation of the timber pieces by means of the cross conveyor. The stops are driven synchronously with the cross conveyer along a continuous track, wherein each stop travels in front of the respective driver of the cross conveyor along part of its feeding track.

Through so-called "adjustment" of the timber pieces in a sawmill plant, the timber piece is displaced in its longitudinal direction to target one or the other end of the timber piece consisting of boards or planks relative to an abutment or a cut-off blade, a so-called "trimmer". The timber pieces undergo this type of adjustment, partly to cut off defects and partly for the timber piece to obtain a length corresponding to a pre-determined module measure.

With a prior art first adjuster, the length displacement takes place by means of stops or stop plates that move synchronously with the cross conveyor, in parallel with this along a continuous motion track, which is oriented in Z direction forward in a flow direction for the timber pieces. The stops are linearly accommodated moveable units that travel around on two chains. The stop plates are suspended on a series of evenly distributed transverse elements along the motion track, which, extending crosswise between said chains, connect these. The stops can be offset (traversed) in a cross direction towards the cross conveyor equipped with a driver through the operation of displacement means comprising a combination of a follower and guide belonging to each stop and which can be transferred between a choice of positions. In this prior art device, the linear guide of a circumferential, continuous guide piece the main plane of which is parallel to one of the continuous motion track's main planes, while a follower, which is constituted by a pair of cam rollers or the like, are continuously guided on a peripheral part or edge of the guide piece. In this context, the expression "continuously" means that the stops are guided throughout the entire revolution around the track and that the follower thus never loses contact with the guide piece.

Said known first device comprises three parallel and abreast mutually spaced guide pieces, which are moveably fastened in a framework included in the device and which through the operation of a stationary fastened pressure medium-activated transfer means (piston-cylinder means) in the framework, independently of each other can carry out lateral transfer across the motion track. Through the operation of an offset guide piece, a stop by choice can thereby be displaced in a direction across the continuous track and thereby be in contact with a timber piece on the track equipped with a driver to displace the timber piece in its longitudinal direction on the track equipped with a driver. In this known device, a frequent division of a series of three stops move in succession after each other, wherein each stop is continuously guided on a pre-determined specific guide piece of said three guide pieces. A problem with this solution is thus that each single stop during the entire revolution is continuously attached to a specific guide piece, which, among other things, limits the capacity of the adjuster.

In a prior art second adjuster known from US 5 911 302 A, a solution has been chosen that uses discontinuously guided stops and a linear guide device in the form of two, in a horizontal plane, pivotable substantially obliquely mounted guides so that the angle of each guide in a horizontal plane on the continuous track can be varied and thereby also the relative spacing between the stops and the cross conveyor. Said pivotable guides act along a positioning area in a work flow in an upper linear part of the motion track. It should be understood that the problems with the occurring "stick-slip" increases the dependence on the angle of the pivotable guides to the transportation direction Z of the continuous track and the degree to which they are aligned diagonally against the transportation direction of said track. In this context, the expression "discontinuously" means that the stops are only guided during a limited part of the revolution in the continuous track, and the follower is alternately brought into and out of contact with the guide during the revolution, i.e. the follower and also the stop let go of the contact with the guide during part of the revolution.

Said known second device comprises two pivotable guides, arranged in the positioning area, which at one end at an entry end of the positioning area are hingedly connected with a framework constituent in the displacement device and at the other end, in a terminating part of the positioning area, in a horizontal plane, can carry out the lateral transfers in an oblique direction, substantially diagonally relative to the direction of the continuous conveyor track during the operation of a transfer means connected to each guide. This known device moreover comprises a collection device in a return line in a lower part of the motion track that alternately returns every other stop to an initial state of the respective guide, in which it should be understood that stops and associated displacement means indeed are discontinuously guided, but that said units are still consistently connected to each other. Regardless of the structure and function, the type of devices that are used for displacing timber pieces longitudinally by adjusting the timber pieces that, to which the present invention relates, constitutes a production step which is substantially limiting the overall production capacity in each sawmill plant generally.

To increase each sawmill plant's total capacity, it is desired to the extent possible to reduce the division of the cross conveyor driver during the adjustment step in the adjustment operation so that the gap that appears between each of the successive timber pieces that are fed forward on the cross conveyor will be as small as possible during the adjustment step itself. Consequently, reduced driver division involves that the adjustment operation will have to be faster and hence also with higher repetition accuracy and positioning, of which the latter is particularly critical as it can mean that the timber piece, due to a certain degree of over-travel in connection with adjustment, does not stop in the desired position, but is positioned in a state out of the desired position.

Usually, the requirement is therefore that a movement of the length of for instance a positioning area in X direction, which is 300 mm, can be carried out with an accuracy of less than 1/10 mm. Add to this that occurring friction between the follower and the guide to cause the stops to execute lateral transfer across the motion track and thereby in the direction towards the cross conveyor equipped with a driver can result in the timber piece not remaining directly in the desired position as soon as a stop returns, depending on the friction, the so-called stick-slip effect that can occur between for instance a slide bush and guide surface. Problems with stick-slip becomes particularly evident in the type of devices that use guides that are oriented diagonally or obliquely towards the transportation direction in the Z direction, while the positioning of the stops during movement takes place in two perpendicular axes. In this context, it is to be understood that the component of force, which acts against the guide is not static but dynamic, whereby the component of force that is perpendicular to the movement direction and consequently acts against the guide will increase more and more the faster the continuous track with the stops rotates. Further, it should be understood that the frictional force that arises between the stop and the guide (e.g. the follower and the guide) will thus vary depending on the speed and also that at a relatively small increase of speed for the stops on the continuous track, the problems with "stick-slip" will increase significantly.

A first object of the present invention is therefore to provide a device for adjusting timber pieces that can work more efficiently than devices known hitherto and which thereby makes it possible to substantially reduce division of the cross conveyor's driver during the adjustment step. A second object of the present invention is to provide a device for adjustment of timber pieces that can work at a high repetition accuracy and positioning of the stops and wherein problems with occurrence of over-travel of the stops can be avoided.

This object of the invention is resolved by a device for displacing timber pieces comprising the combination of features of appended claim 1.

Preferred embodiments of the invention appear from the dependent claims.

In this context, it has thus been ascertained that an adjuster of the type known recently, which is described above, and whose stops and associated displacement means are consistently connected to each other, but discontinuously guided indeed may work more efficiently than the previously known type of adjustment devices, the stops and displacement means of which are both continuously guided and consistently connected to each other.

The insight that forms the basis of the invention is thus that an adjuster the stops and displacement means of which is not only discontinuously guided, but it is also possible to choose any combination of interacting stops and displacement means that can substantially contribute to increasing the capacity of the adjuster. The present invention has enabled this by equipping the displacement means with a docking device with which displacement of a timber piece in its longitudinal direction on the cross conveyor can take place with an optional combination of stops and displacement means.

In adjusters known so far, they are affected by stops travelling along a continuous track always at a certain order of the displacement means, for instance every second or third stops are always affected in a succession of corresponding displacement means. The present invention does not have this limitation, but due to a docking device arranged on the displacement means, any combination of stops and displacement means can be chosen in any succession.

According to an embodiment, the adjuster comprises a docking device with a guide for a follower provided for each displacement means, wherein this guide has a first respectively a second end. The guide which is terminated in a respective end defines the device's discontinuously guided combination of stops and displacement means. Note here the first known device with continuous guide described above, which includes a continuous circumferential guide piece for the follower of the stop.

According to another embodiment, the positioning area comprises an entry end too that forms a defined zero reference (0-ref) for each new stop that successively arrives at the positioning area. Due to the zero reference 0-ref of the entry end each of the stops that successively arrives at the positioning area can be caused to interact with any of the displacement means, i.e. by way of the guide that is set for a state at a transfer point to the relevant guide in front of said entry end.

In another embodiment, the stops are positioned electrically, in which each displacement means comprises an electrically powered linear unit, particularly such linear unit with built-in notched belt, whereby significantly improved precision and reduced stick-slip are obtained.

In the following, the invention is described on the basis of an exemplary embodiment, which is shown in the accompanying drawings, wherein
Fig. 1 shows a device according to the invention in a perspective view together with a merely schematically indicated cross conveyor for timber pieces,
Fig. 2 shows the device according to the invention in a perspective view, where the cross conveyor for timber pieces has been left out for clarity reasons,
Fig. 3 shows a continuous track constituent in the device with rotatable stops in a perspective view with partially removed parts,
Fig. 4 shows a displacement means constituent in the device with connected docking device in a cross sectional view in larger scale and viewed along the line IV-IV in Fig. 5,
Fig. 5 shows the device according to the invention in a side view, where the cross conveyor for timber pieces has been left out for clarity reasons, and
Fig. 6 shows a device according to the invention in a plane view with schematically indicated, timber pieces carried on a cross conveyor and displaced longitudinally by stops included in the device.

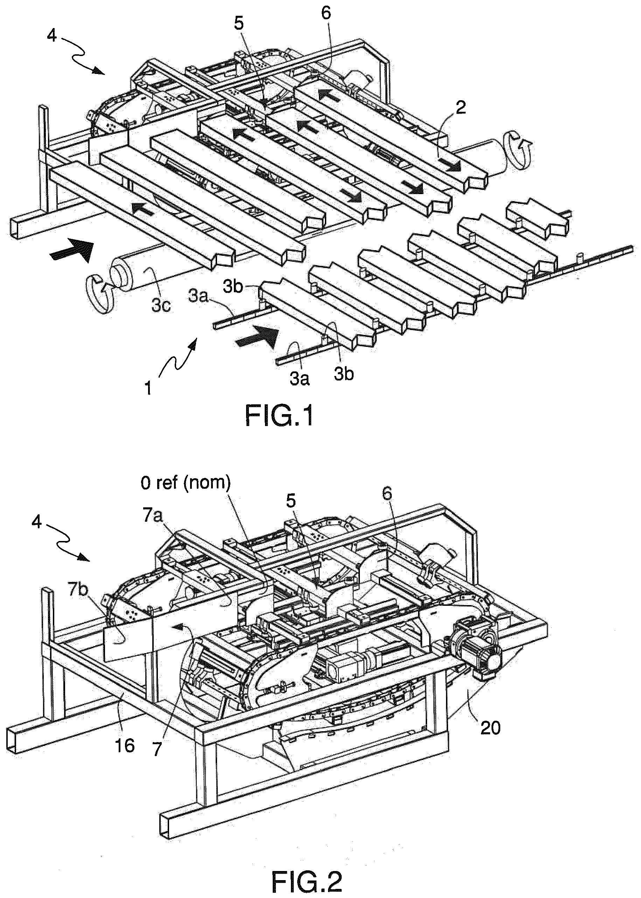

With reference to Figs 1 and 2, a device is shown for displacing timber pieces longitudinally at adjustment of the timber pieces. The device comprises an inherently known cross conveyor 1 equipped with a driver for transporting timber pieces 2, in practice in a horizontal plane. The cross conveyer 1, shown schematically in Fig. 1, comprises a number of chains 3a travelling in parallel with each other on which driver 3b is arranged. The cross conveyor 1 further comprises a number of transverse roller bearers 3c, of which, for clarity reasons, only one is shown in Fig. 1. The purpose of said transverse roller bearers 3c is to carry the timber pieces 2 that pass by way of the roller bearers, laterally to the left in Fig. 1, which is illustrated by emphasized arrows on the last timber piece in the row.

In parallel with a lateral section of the cross conveyor 1, to the left of this viewed in Fig. 1, a continuous track 4 is arranged that travels in a vertical plane and formed by a chain conveyor that travels in parallel with the cross conveyor 1 equipped with a driver. The continuous track 4 is equipped with a series of stops 6, which are intended to be forwarded laterally towards the cross conveyor 1 located to the right, so that the stops assume a state in which they bear against the timber pieces' 2 one end so as to thereby displace the timber piece laterally during part of the timber pieces' transportation on the cross conveyor 1.

The size and the direction of the displacement inwards/outwards with respect to a nominal reference or zero level are determined by regulators or some kind of automated feature, for instance with respect to the extent of the log trim that is to be executed on the respective timber piece 2. The size of the log trim is fed into a computer, which subsequently guides the relevant displacement means to make the corresponding displacement of the timber piece 2.

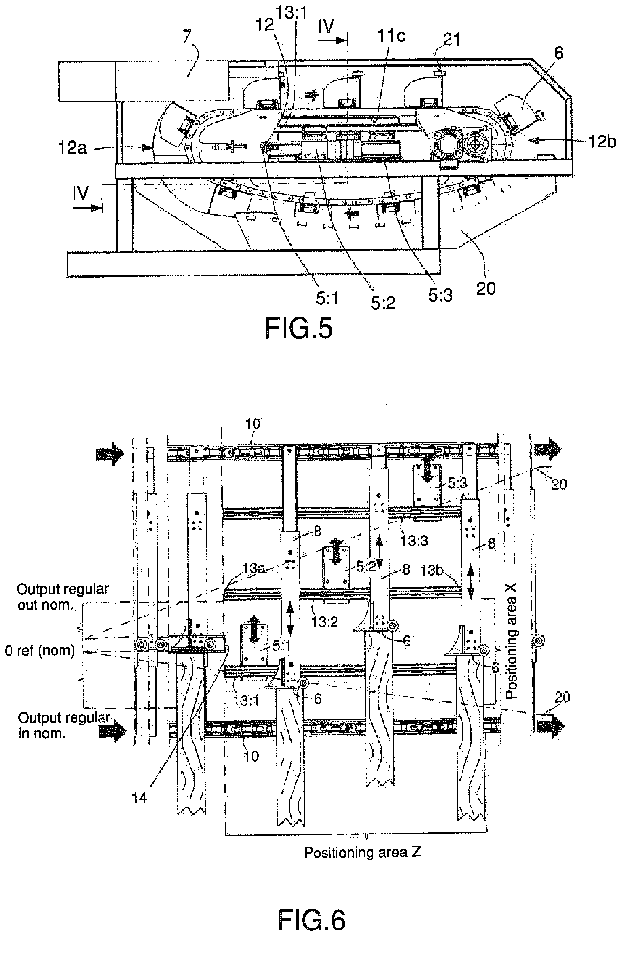

When the timber piece 2 arriving on the cross conveyor 1 is fed forwards to the continuous track 4, through the operation of said transverse roller bearers 3c, an end adjustment of the timber piece 2 is made, so that its end lies in a defined end line at nominal measure 0-ref zero reference level or zero level. The displacement means 5 are in their longitudinal direction guided so that they, at the point where the stops 6 first come in line with the timber pieces 2 on the cross conveyor 1, lie in a somewhat retracted state, to the left of said zero reference level, which is most clearly shown in Fig. 6.

The displacement means 5 are not directly adjustable in the desired end state, but can be displaced in the direction towards the cross conveyor 1 or can be retracted in the direction from said cross conveyor, which is best understood by studying Fig. 6 closely. The total movement area in a positioning area in X direction can for instance be 300 mm, wherein the designation "Output regular out nom.", which can for instance be 120 mm movement from the zero reference level 0-ref relates to retraction of the stops 6 in the direction from the cross conveyor 1, while the designation "Output regular in nom.", which can for instance be 180 mm from the zero reference level relates to displacement of the stops 6 in direction towards the cross conveyor 1 from the zero reference level or nominal measure.

From the location where the stops 6 first come into line with the timber pieces 2 on the cross conveyor 1, a dead plate, generally denoted 7, is arranged, limiting the displacement of the displacement means 5 and the stop 6 against the cross conveyor 1. The dead plate 7 extends in a horizontal plane and is oriented so that it lies in line with the direction of motion of the continuous track. A front end 7a of the dead plate extends somewhat into the continuous track 4, while a rear end 7b of the dead plate extends somewhat outside the continuous track 4. The rear end 7b is angled obliquely outwards from the cross conveyor 1, whereby the position wherein the stops 6 first come into line with the timber pieces 2 on the cross conveyor 1 is constituted by the front end 7a, wherein said position is on the level of the zero reference 0-ref, while the second end is positioned at a distance from the cross conveyor 1, which via the angle of the rear end successively is reduced in the direction towards said front part and said zero reference.

Thereby a timber piece 2 on the cross conveyor 1, which through the operation of the transverse rollers 3c in the cross conveyor initially drives one piece onto the continuous track 4 past the zero reference 0-ref and further until a state that is limited by the angled rear end 7b of the dead plate, through the operation of the stop 6 is displaced away from the continuous track 4 back to the desired position on the cross conveyor 1 for adjustment. Displacement of the timber piece 2 from the cross conveyor 1 and further onto the continuous conveyor 4 is limited by the dead plate_7. Displacement of the timber piece 2 out from the cross conveyor 1 or back into the cross conveyor 1 to a correct position for adjustment takes place through the operation of the stop 6, which should be understood by studying Figs 1 and 6 closely.

The displacement means 5, as mentioned initially, must be able to displace the timber piece 2 at a pre-determined distance, and this is achieved by the displacement means 5 and hence the stop 6, when a desired displacement of the timber piece 2 has been reached, receives a control signal, which causes the stop 6 to be retracted and lose contact with one end of the timber piece, and the timber piece 2 can continue to be fed forward on the cross conveyor 1 equipped with a driver, for adjustment such as trimming of one end of the timber piece with a cut-off blade to obtain a desired linear measure. The transfer of the timber piece 2 in its longitudinal direction is thereby individually variable by the stop 6 leaving the timber piece in an optional state along the continuous track 4.

As most clearly appears from Figs 1 and 2 and as described initially, the stops 6 travel around on the continuous track 4 on which the stops 6 are driven synchronously with the cross conveyer 1 along it and each stop 6 travels in front of the respective driver 3b of the cross conveyor 1 along part of its feeding track.

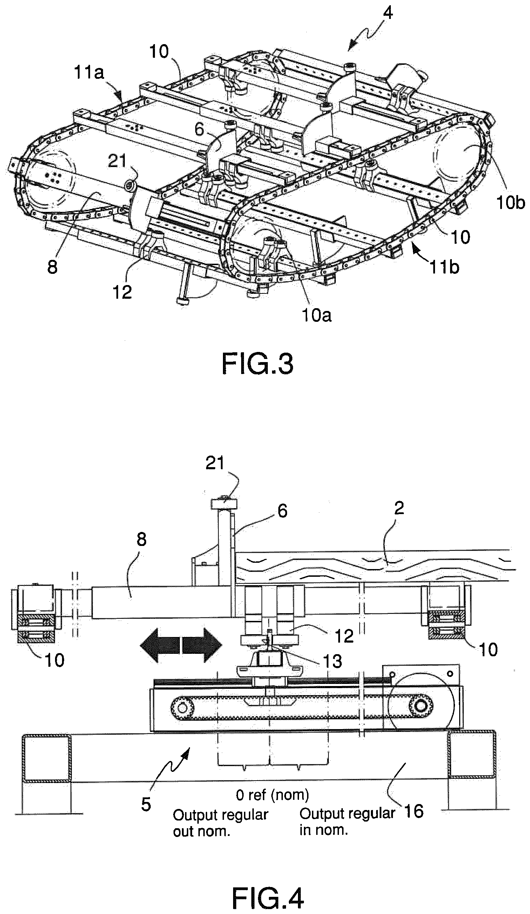

Fig. 3 shows in more detail that the stops 6 are displaceably mounted on units 8 that are oriented across the continuous track 4 and transferable along it, which is illustrated by the double arrows on each unit 8 in Fig. 6. The continuous track 4 travels around on a pair of transmission elements in the form of chains 10, which travelling on a first and second pulley respectively drive wheel 10a, 10b defines a substantially plane upper work flow 11a, which is supported by support guides 11c (see Fig. 5), respectively a substantially free-hanging lower return line 11b. Said pulley respectively drive wheels 10a, 10b form, viewed from the flow direction, a front respectively rear turning end for the track. For clarity reasons, in Fig. 3 said drive respectively pulley wheels 10a, 10b are only indicated by a dashed outline.

Fig. 4 shows a displacement means 5 constituent in the device, with which stops 6 are intended to be displaced in a cross direction towards the transfer along the continuous track 4 and also in the longitudinal direction of the timber pieces 2 on the cross conveyor 1 for displacement of said timber pieces 2 in the longitudinal direction. The displacement means 5 comprise a follower 12 provided for each stop 6 with a pair of rolling bodies which between them delimit a gap and a plurality of longitudinal guides 13 corresponding to the follower linearly with substantially rectangular cross sectional profile. Rolling bodies that in the said manner straddle a linear guide result in a low substantially frictionless relative movement at the movement procedure, a linear respectively length guide system of the present kind, which reduces the "stick-slip" effect.

As most clearly appears from Fig. 6, the follower's 12 pair of rollers, at a transfer point in an entry end 14 of a positioning area X, Y, wherein said entry end forms a defined zero reference 0-ref for adjustment with respect to the width X of the positioning area for stops 6, which successively arrive to the positioning area, are caused to interact with a first end 13a of a guide 13 that is set for a state at a transfer point in front of said entry end, whereby the rollers are forwarded into a state, where they can between them straddle it as a linearly formed guide 13.

In the embodiment described here, the device is equipped with a first displacement means 5:1, a second displacement means 5:2 and a third displacement means 5:3, which again is arranged to affect a first 13:1, a second 13:2 respectively a third guide 13:3, independently of each other, to move across the width X of the positioning area in the cross direction of the continuous conveyor. As shown in Fig. 6, each guide 13:1, 13:2, 13:3 is thus adjustable across a width X of the positioning area X, Z in the cross direction of the continuous conveyor 4.

The displacement means 5:1, 5:2, 5:3 are fastened in a stationary framework 16 that is included in the device. As shown in Fig. 6, each guide 13:1-13:3 acts within substantially the entire width of the positioning area X, Z across the continuous track 4 and extends within the positioning area along an operating length Z of the work flow 11a of the continuous track 4. The guides 13:1-13:3 are distributed in parallel next to each other in a horizontal plane along an operating width X of the positioning area in the cross direction of the continuous track 4, and along which width the guides 13:1-13:3 extend in parallel with each other and in line with the travelling direction of the continuous track 4. Each guide 13:1-13:3 is consequently adjustable through parallel transfer both mutually and relative to the travelling direction of the stops 6 on the continuous track 4.

An entry end 14 to the positioning area X, Z forms a defined zero reference 0-ref for adjusting the timber piece 2 on the cross conveyor 1 with respect to the width X of the positioning area. The stops 6 that move around the continuous track 4 and which successively arrive at the entry end 14 of the positioning area X, Z can be caused to interact with any of the guides 13:1-13:3. By operation of the displacement means 5:1, 5:2, 5:3, the desired guides 13:1-13:3 can be set for a state at the transfer point in front of said entry end 14, so that the follower's 12 rolling bodies can straddle the guide 13 during the stop's 6 continued movement along the continuous track 4. Via selective adjustment of the displacement means 5:1-5:3, each stop 6 that successively arrives at the entry end 14, can in a first step be captured at a transfer point in a state in front of the entry end 12 by any of the guides 13:1-13:3, and in a second step carry out adjustment of a timber piece 2 by being displaced in the direction inwards/outwards with respect to the zero reference 0-ref of the positioning area X, Z.

As most clearly appears from Figs 2 and 6, the present device comprises a collection device 20 with which each stop 6, when it after interaction and executed adjustment of a timber piece 2 has left the guide's 13:1-13:3 other end 13b, is arranged, during its continued transfer along the track, to return to the entry end 14.

As appears from a closer study of Fig. 6 and the path indicated with the dashed outline, the collection device's 20 path narrows in the direction towards the entry end of the positioning area 14 for the stops 6. In an embodiment, each stop 6 is equipped with a second follower 21, which relative to the central front of the continuous track is located in the stop's radially outer end of each stop to be captured by a track that is broader at one end and narrowing towards the entry end 14 of the positioning area and which track is substantially located at a level immediately below the return line 11b of the continuous track.

## Claims

1. A device for displacing timber pieces (2) longitudinally by adjustment of the timber pieces, comprising a cross conveyor (1) equipped with a driver (3b) on which the timber pieces are conveyed in a cross direction, stops (6) provided to bear against one face of the timber pieces (2) and thereby displace the timber piece longitudinally during part of the transport of the timber pieces by means of the cross conveyor (1), a continuous track (4) with which the stops (6) are driven synchronously with the cross conveyor (1) along it and wherein each stop travels in front of the respective driver (3b) of the cross conveyor (1) along part of its feeding track, wherein the stops (6) are displaceably mounted on units that are oriented across the continuous track (4) and transferable along it, displacement means (5) arranged to displace the stops (6) in a positioning area (X, Z) in a cross direction against the transfer along the track and in the longitudinal direction of the timber pieces for displacement also of the timber pieces (2) in the longitudinal direction,
wherein each timber piece (2) is displaced in its longitudinal direction on the cross conveyor (1) with a via discontinuous control optional combination of stops (6) and displacement means (5), whereby the displacement means (5) comprise,
at least two, in the cross direction of the continuous conveyor (4), displacement means (5:1, 5:2, 5:3) variable independently of each other, a docking device comprising a guide (13:1, 13:2, 13:3) for each displacement means (5:1, 5:2, 5:3) with a first end (13a) respectively a second end (13b), **characterised in that** each guide (13:1, 13:2, 13:3) is adjustable via parallel transfer relative to the travelling direction of the stops (6) on the continuous track (4) and thereby across a width (X) of the positioning area (X, Z) in the cross direction of the continuous conveyor (4),
a first follower (12) provided for each stop (6), which can be caused to be in guided interaction with a guide (13:1, 13:2, 13:3) through mutual setting of states, wherein said follower respectively guide meet at a transfer point in a state where they are situated in front of each other,
an entry end (14) to the positioning area (X, Z), wherein said entry end forms a defined zero reference (0-ref) for adjustment with respect to the positioning area width (X) for each stop (6) that successively arrive at the positioning area, and which stops (6) can be caused to interact with any guide (13:1, 13:2, 13:3) the state of which is set at said transfer point.

2. A device according to claim 1, wherein the displacement means (5:1, 5:2, 5:3) are selectively adjustable in the direction of the cross conveyor (1) and which device further comprises a first step in which each stop (6) that successively arrives at the entry end (14), is captured at said transfer point by a guide (13:1, 13:2, 13:3), and a second step in which adjustment of a timber piece (2) is carried out by displacing the stop (6) and thus the timber piece (2) in a direction inwards/outwards with respect to the zero reference (0-ref) of the positioning area (X, Z).

3. A device according to any one of claims 1-2, further comprising a collection device (20) with which each stop 6, when it after interaction and executed adjustment of a timber piece (2) has left the guide's (13:1, 13:2, 13:3) other end (13b), during its continued transfer along the track, is returned to the entry end (14).

4. A device according to claim 3, wherein the track of the collecting device (20) narrows in the direction towards the positioning area's (X, Z) entry end (14) for the stops (6) and wherein each stop (6) is equipped with a second follower (21) that is intended to be captured by the narrowing track for returning the stop to the entry end of the positioning area.

5. A device according to any one of claims 3-4, wherein the continuous track (4) comprises an upper work flow (11a) in which the positioning area (X, Z) is arranged and a lower return line (11b) in which the collection device (20) is arranged.

6. A device according to any one of claims 1-5, wherein each guide (13) is linear and oriented to extend in parallel with the flow direction of the continuous track (4).

7. A device according to any one of claims 1-6, comprising a first (5:1), a second (5:2) and a third displacement means (5:3) and a first (13:1), a second (13:2) and a third guide (13:3).

8. A device according to any one of claims 1-7, wherein each displacement means (5:1, 5:2, 5:3) comprises an electrically powered linear unit, particularly a linear unit with a built-in notched belt.

9. A device according to claim 8, wherein each electrically powered linear unit comprises a carriage that is moveable forwards and backwards, on which carriage the guide (13:1, 13:2, 13:3) is suspended and which guide can thereby be transferred between optional positions along the positioning area width (X).

10. A device according to any one of claims 1-9, wherein each displacement means (5,:1, 5:2, 5:3) is fastened in a stationary framework (16) that is included in the device and is accommodated within the perimeter or circumference that is encompassed by the continuous track (4).

## Patentansprüche

1. Vorrichtung zum Verschieben von Holzstücken (2) in Längsrichtung durch Verstellen der Holzstücke, das einen Querförderer (1) umfasst, der mit einem Mitnehmer (3b) ausgestattet ist, auf dem die Holzstücke in einer Querrichtung gefördert werden, Anschläge (6), die vorgesehen sein sind, um gegen eine Fläche der Holzstücke (2) zu drücken und das Holzstück dadurch während eines Teils des Transports der Holzstücke mittels des Querförderers (1) in Längsrichtung zu verschieben, eine kontinuierliche Bahn (4), mit der die Anschläge (6) synchron mit dem Querförderer (1) entlang diesem angetrieben werden und wobei jeder Anschlag sich vor dem jeweiligen Mitnehmer (3b) des Querförderers (1) entlang eines Teils seiner Zuführbahn bewegt, wobei die Anschläge (6) an, über die kontinuierliche Bahn (4) orientierten und entlang dieser überführbaren, Einheiten verschiebbar gelagert sind, Verschiebungsmittel (5), die angeordnet sind, um die Anschläge (6) in einem Positionierbereich (X, Z) in einer Querrichtung gegen die Überführung entlang der Bahn und in Längsrichtung der Holzstücke zum Verschieben ebenfalls der Holzstücke (2) in Längsrichtung zu verschieben,
wobei jedes Holzstück (2) in seiner Längsrichtung auf dem Querförderer (1) mit einer über diskontinuierliche Steuerung optionalen Kombination von Anschlägen (6) und Verschiebungsmitteln (5) verschoben wird,
wobei die Verschiebungsmittel (5) Folgendes umfassen
mindestens zwei, in Querrichtung des kontinuierlichen Förderbandes (4), Verschiebungsmittel (5:1, 5:2, 5:3), die unabhängig voneinander variabel sind, eine Andockvorrichtung mit einer Führung (13:1, 13:2, 13:3) für jedes Verschiebungsmittel (5:1, 5:2, 5:3) mit einem ersten Ende (13a) bzw. einem zweiten Ende (13b), **dadurch gekennzeichnet, dass** jede Führung (13:1, 13:2, 13:3) über eine Parallelüberführung relativ zur Bewegungsrichtung der Anschläge (6) auf der kontinuierlichen Bahn (4) und dadurch über eine Breite (X) des Positionierbereichs (X, Z) in Querrichtung des kontinuierlichen Förderbandes (4) verstellbar ist,
einen ersten Folger (12), der für jeden Anschlag (6) vorgesehen ist, der durch gegenseitige Einstellung von Zuständen in eine geführte Wechselwirkung mit einer Führung (13:1, 13:2, 13:3) gebracht werden kann, wobei der Folger beziehungsweise Führung sich an einem Überführungspunkt in einem Zustand treffen, in dem sie vor einander liegen,
ein Eintrittsende (14) zum Positionierbereich (X, Z), wobei das Eintrittsende eine definierte Nullreferenz (0-ref) zur Verstellung mit Bezug auf die Positionierflächenbreite (X) für jeden Anschlag (6) bildet, die aufeinanderfolgend an dem Positionierbereich ankommen, und welche Anschläge (6) in Zusammenwirkung mit einer beliebigen Führung (13:1, 13:2, 13:3) gebracht werden können, deren Zustand an dem Überführungspunkt eingestellt ist.

2. Vorrichtung nach Anspruch 1, wobei die Verschiebungsmittel (5:1, 5:2, 5:3) wahlweise in Richtung des Querförderers (1) verstellbar sind und welche Vorrichtung ferner einen ersten Schritt umfasst, bei dem jeder Anschlag (6), der aufeinanderfolgend am Eintrittsende (14) ankommt, an dem Überführungspunkt durch eine Führung (13:1, 13:2, 13:3) erfasst wird, und einen zweiten Schritt, bei dem die Verstellung eines Holzstücks (2) durch Verschieben des Anschlags (6) und damit des Holzstücks (2) in einer Richtung nach innen/außen mit Bezug auf die Nullreferenz (0-ref) des Positionierbereichs (X, Z) durchgeführt wird.

3. Vorrichtung nach einem der Ansprüche 1 bis 2, die ferner eine Sammelvorrichtung (20) umfasst, mit der jeder Anschlag 6, wenn er nach dem Zusammenwirken und der ausgeführten Einstellung eines Holzstücks (2) das andere Ende (13b) der Führung (13:1, 13:2, 13:3) verlassen hat, während seiner fortgesetzten Überführung entlang der Bahn zu dem Eintrittsende (14) zurückgeführt wird.

4. Vorrichtung nach Anspruch 3, wobei sich die Bahn der Sammelvorrichtung (20) in Richtung auf das Eintrittsende (14) des Positionierbereichs (X, Z) für die Anschläge (6) verengt und wobei jeder Anschlag (6) mit einem zweiten Folger (21) ausgestattet ist, der von der sich verengenden Bahn erfasst werden soll, um den Anschlag zum Eintrittsende des Positionierbereichs zurückzuführen.

5. Vorrichtung nach einem der Ansprüche 3 bis 4, wobei die kontinuierliche Bahn (4) einen oberen Arbeitsablauf (11a) umfasst, in dem der Positionierungsbereich (X, Z) angeordnet ist, und eine untere Rückführleitung (11b), in der die Sammelvorrichtung (20) angeordnet ist.

6. Vorrichtung nach einem der Ansprüche 1 bis 5, wobei jede Führung (13) linear und ausgerichtet ist, um sich parallel zu der Ablaufrichtung der kontinuierlichen Bahn (4) zu erstrecken.

7. Vorrichtung nach einem der Ansprüche 1 bis 6, umfassend ein erstes (5:1), ein zweites (5:2) und ein drittes Verschiebungsmittel (5:3) und eine erste (13:1), eine zweite (13:2) und eine dritte Führung (13:3).

8. Vorrichtung nach einem der Ansprüche 1 bis 7, wobei jedes Verschiebungsmittel (5:1, 5:2, 5:3) eine elektrisch angetriebene Lineareinheit, insbesondere eine Lineareinheit mit eingebautem Kerbband, umfasst.

9. Vorrichtung nach Anspruch 8, wobei jede elektrisch angetriebene Lineareinheit einen Schlitten umfasst, der vorwärts und rückwärts bewegbar ist, auf welchem Schlitten die Führung (13:1, 13:2, 13:3) aufgehängt ist und die dadurch zwischen optionalen Positionen entlang der Positionierbereichsbreite (X) überführt werden kann.

10. Vorrichtung nach einem der Ansprüche 1 bis 9, wobei jedes Verschiebungsmittel (5:1, 5:2, 5:3) in einem stationären Rahmen (16) befestigt ist, der in der Vorrichtung enthalten ist und innerhalb des von der kontinuierlichen Bahn (4) umfassten Umfangs oder Umkreises aufgenommen ist.

## Revendications

1. Dispositif de déplacement longitudinal de pièces de bois (2) par réglage des pièces de bois, comprenant un convoyeur transversal (1) équipé d'un entraîneur (3b) sur lequel les pièces de bois sont transportées dans le sens transverse, des butées (6) prévues pour s'appuyer contre une face des pièces de bois (2) et déplacer ainsi la pièce de bois longitudinalement pendant une partie du transport des pièces de bois au moyen du convoyeur transversal (1), une voie continue (4) avec laquelle les butées (6) sont entraînées de manière synchrone avec le convoyeur transversal (1) le long de celui-ci, et dans lequel chaque butée se déplace devant l'entraîneur respectif (3) du convoyeur transversal (1) le long d'une partie de sa voie d'alimentation, dans lequel les butées (6) sont montées de manière coulissante sur des unités orientées transversalement à la voie continue (4) et transférables le long de celle-ci, des moyens de déplacement (5) agencés pour déplacer les butées (6) dans une zone de positionnement (X, Z) dans le sens travers à l'encontre du transfert le long de la voie et dans le direction longitudinale des pièces de bois pour le déplacement également des pièces de bois (2) dans la direction longitudinale,
dans lequel chaque pièce de bois (2) est déplacée dans sa direction longitudinale sur le convoyeur transversal (1) avec une combinaison optionnelle de commande discontinue de butées (6) et de moyens de déplacement (5), les moyens de déplacement (5) comprenant au moins deux, dans le sens traverse du convoyeur continu (4), moyens de déplacement (5:1, 5:2, 5:3) variables indépendamment l'un de l'autre, un dispositif d'accostage comprenant un guide (13:1, 13:2, 13:3) pour chaque moyen de déplacement (5:1, 5:2, 5:3) avec respectivement une première extrémité (13a) et une deuxième extrémité (13b), **caractérisé en ce que** chaque guide (13:1, 13:2, 13:3) est réglable via transfert parallèle par rapport au sens de déplacement des butées (6) sur la voie continue (4) et ainsi sur une largeur (X) de la zone de positionnement (X, Y) dans le sens traverse du convoyeur continu (4),
un premier suiveur (12) prévu pour chaque butée (6) et qui peut être amené à être en interaction guidée avec un guide (13:1, 13:2, 13:3) par l'intermédiaire d'un réglage mutuel d'états, respectivement ledit suiveur et le guide se rencontrent à un point de transfert dans un état où ils sont situés l'un en face de l'autre,
une extrémité d'entrée (14) à la zone de positionnement (X, Z), ladite extrémité d'entrée formant une référence zéro définie (0-ref) pour le réglage par rapport à la largeur de la zone de positionnement (X) pour les butées (6) qui arrivent successivement à la zone de positionnement, et lesquelles butées (6) peuvent être amenées à interagir avec tout guide (13:1, 13:2, 13:3) dont l'état est établi audit point de transfert.

2. Dispositif selon la revendication 1, dans lequel les moyens de déplacement (5:1, 5:2, 5:3) sont sélectivement réglables dans la direction du convoyeur transversal (1), et ledit dispositif comprend en outre une première étape dans laquelle chaque butée (6) qui arrive successivement à l'extrémité d'entrée (14), est capturée au niveau dudit point de transfert par un guide (13:1, 13:2, 13:3), et une deuxième étape dans laquelle le réglage d'une pièce de bois (2) est effectué en déplaçant la butée (6) et ainsi la pièce de bois (2) dans une direction vers l'intérieur / vers l'extérieur par rapport à la référence zéro (0 - ref) de la zone de positionnement (X, Z).

3. Dispositif selon l'une quelconque des revendications 1 à 2, comprenant en outre un dispositif de collecte (20) avec lequel chaque butée 6, lorsqu'elle, après l'interaction et le réglage exécuté d'une pièce de bois (2), a quitté l'autre extrémité (13b) du guide (13:1, 13:2, 13:3), lors de sa poursuite du transfert le long de la voie, est ramenée à l'extrémité d'entrée (14).

4. Dispositif selon la revendication 3, dans lequel la voie du dispositif de collecte (20) se rétrécit dans la direction vers l'extrémité d'entrée (14) de la zone de positionnement (X, Z) pour les butées (6), et dans lequel chaque butée (6) est équipée d'un deuxième suiveur (21) destiné à être capturé par la voie rétrécissante pour ramener la butée vers l'extrémité d'entrée de la zone de positionnement.

5. Dispositif selon l'une quelconque des revendications 3 à 4, dans lequel la voie continue (4) comprend un flux de travail supérieur (11a) dans lequel la zone de positionnement (X, Z) est arrangée, et une ligne de retour inférieure (11b) dans laquelle le dispositif de collecte (20) est arrangé.

6. Dispositif selon l'une quelconque des revendications 1 à 5, dans lequel chaque guide (13) est linéaire et orienté pour s'étendre parallèlement à la direction de flux de la voie continue (4).

7. Dispositif selon l'une quelconque des revendications 1 à 6, comprenant un premier (5:1), un deuxième (5:2) et un troisième moyen de déplacement (5:3) et un premier (13:1), un deuxième (13:2) et un troisième guide (13:3).

8. Dispositif selon l'une quelconque des revendications 1 à 7, dans lequel chaque moyen de déplacement (5:1, 5:2, 5:3) comprend une unité linéaire à alimentation électrique, en particulier une unité linéaire avec une courroie crantée intégrée.

9. Dispositif selon la revendication 8, dans lequel chaque unité linéaire à alimentation électrique comprend un chariot mobile vers l'avant et vers l'arrière, chariot sur lequel le guide (13:1, 13:2, 13:3) est suspendu, et lequel guide peut ainsi être transféré entre les positions facultatives le long de la largeur de la zone de positionnement (X).

10. Dispositif selon l'une quelconque des revendications 1 à 9, dans lequel chaque moyen de déplacement (5,:1, 5:2, 5:3) est fixé dans un cadre fixe (16) qui est inclus dans le dispositif et est logé à l'intérieur du périmètre ou de la circonférence qui est englobé(e) par la voie continue (4).
